# EUROPÄISCHE PATENTSCHRIFT

(11) **EP 1 325 162 B1**
(45) Veröffentlichungstag und Bekanntmachung des Hinweises auf die Patenterteilung: **25.05.2005**
(21) Anmeldenummer: 01969464.5
(22) Anmeldetag: 21.07.2001
(51) Int. Cl.: C21D 1/42, H05B 6/44

(54) **VORRICHTUNG ZUM INDUKTIVEN AUFHEIZEN VON WERKSTÜCKEN**
DEVICE FOR INDUCTIVELY HEATING WORKPIECES
DISPOSITIF DE CHAUFFAGE PAR INDUCTION DE PIECES A USINER

(30) Priorität: 19.09.2000 DE 10046547
(43) Veröffentlichungstag der Anmeldung: 09.07.2003
(73) Patentinhaber: Bilz Werkzeugfabrik GmbH & Co. KG, 73760 Ostfildern (DE); INNOVAT Gesellschaft für Sondermaschinenbau, Mess- und Steuerungstechnik mbH, 77963 Schwanau (DE)
(72) Erfinder: VOSS, Michael, 71229 Leonberg (DE); IRION, Ingo, 77963 Schwanau (DE)
(74) Vertreter: Wolf, Eckhard, Dr.-Ing.
(86) Internationale Anmeldenummer: PCT/EP2001/008446
(87) Internationale Veröffentlichungsnummer: WO 2002/024965

(56) Entgegenhaltungen:
- EP-A- 0 776 146
- WO-A-98/52385
- GB-A- 2 002 659
- US-A- 4 185 183
- PATENT ABSTRACTS OF JAPAN vol. 008, no. 236 (C-249), 30. Oktober 1984 (1984-10-30) & JP 59 116318 A (MITSUBISHI DENKI KK), 5. Juli 1984 (1984-07-05)
- HELLEGOUARC'H J ET AL: "NOUVELLE TECHNOLOGIE DE CHAUFFAGE PAR INDUCTION DES RIVES D'EBAUCHES POUR TRAIN A BANDES" CAHIERS D'INFORMATIONS TECHNIQUES DE LA REVUE DE METALLURGIE, REVUE DE METALLURGIE. PARIS, FR, Bd. 86, Nr. 7/8, 1. Juli 1989 (1989-07-01), Seiten 593-602, XP000407061 ISSN: 0035-1563

## Beschreibung

Die Erfindung betrifft eine Vorrichtung zum induktiven Aufheizen einer rotationssymmetrischen Werkstückpartie eines aus elektrisch leitendem Material bestehenden Werkstücks mit einer die Werkstückpartie am Umfang zumindest teilweise umfassenden, mit einem hochfrequenten Wechselstrom beaufschlagbaren Spulenanordnung.

Bei einer Vorrichtung dieser Art ist es bekannt, eine als Werkzeugaufnahme ausgebildete hülsenförmige Werkstückpartie unter Vergrößerung des Hülsendurchmessers so zu erwärmen, daß ein Werkzeug mit seinem Schaft in die vergrößerte Aufnahme eingeführt und anschließend durch Abkühlen dort eingeschrumpft werden kann. Umgekehrt kann das Einsteckwerkzeug aus der Werkzeugaufnahme durch Aufheizen wieder ausgespannt werden. Die Induktionsspule ist dort als Ring- oder Zylinderspule ausgebildet, die vor dem Aufheizvorgang auf die rotationssymmetrische Werkstückpartie koaxial aufgeschoben wird. Letzteres ist nur dann möglich, wenn das einzuspannende Werkzeug an seinem über den Schaft überstehenden Teil nicht erweitert ist. Es gibt aber Werkzeuge, die an ihrem Schaft eine Verdickung aufweisen. Für diese Anwendungsfälle sind die bekannten ringförmigen Induktionsspulen nicht geeignet.

WO-A-98 52 385 und EP-A- 776 146 beschreiben rund um ein rotations symmetrisches Werstück jeweils paarweise gegenüber angeordnete Induktoren mit U-förmigen Spulenkernen.

Ausgehend hiervon liegt der Erfindung die Aufgabe zugrunde, eine Vorrichtung zum induktiven Aufheizen von Werkstücken zu entwickeln, die auch für kompliziert gestaltete, mit Verdickungen versehene Teile geeignet ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, daß zur Aufheizung von Werkstücken mit variabler Axialkontur eine teilbare Spulenanordnung erforderlich ist. Um dies zu erreichen, wird gemäß der Erfindung vorgeschlagen, daß die Spulenanordnung mindestens zwei durch einen in seiner Weite verstellbaren Luftspalt getrennte, jeweils mindestens eine Spule tragende Spulenkerne aus magnetisierbarem Material aufweist, und daß die aufzuheizende Werkstückpartie in den Luftspalt einführbar ist. Die Polflächen der die Spulen tragenden Spulenkeme sind über den Luftspalt hinweg einander zugewandt, während die Spulen unter Erzeugung eines an den jeweils zugewandten Polflächen gleichpoligen oder gegenpoligen Wechselmagnetfelds mit hochfrequentem Wechselstrom beaufschlagbar sind.

Die Erfindung sieht vor, daß die einander zugewandten Spulenkerne eine U-förmige Gestalt aufweisen, wobei auf jedem Spulenkern mindestens eine Spule angeordnet ist und die freien Enden der U-Schenkel der Spulenkeme unter Bildung des Luftspalts einander zugewandt sind. Die freien Polflächen der U-Schenkel der Spulenkerne sind in Anpassung an die Außenkontur der zu erwärmenden Werkstückpartie schrag ausgebild und schließen paarweise einen in Richtung zum Luftspalt offenen Winkel miteinander ein.

Vorteilhafterweise werden die auf den Spulenkernen angeordneten Spulen so mit Wechselstrom gleicher Frequenz und gleicher oder ungleicher Phase beaufschlagt, daß die einander zugewandten freien Enden der Spulenkerne gleichpolig oder gegenpolig gepolt sind. Hier hat sich gezeigt, daß aufgrund der ungleichen Wärmequellenverteilung über den Umfang der aufzuheizenden Werkstückpartie sich eine ungleiche Temperaturverteilung ergibt, die zwar durch Wärmeleitung allmählich ausgeglichen wird. Bei sehr schellen Aufheizvorgängen in der Größenordnung von wenigen Sekunden könnte jedoch ein Ausgleich der Wärmequellenverteilung über den Umfang von Vorteil sein. Um dies zu erreichen, wird gemäß einer vorteilhaften Ausgestaltung der Erfindung vorgeschlagen, daß die Spulen auf den beiden Spulenkernen in vorgegebenen, gegebenenfalls variablen Zeitabständen alternierend mit gleichphasigen und gegenphasigen Wechselströmen beaufschlagt werden.

Eine bevorzugte Anwendung der Erfindung sieht vor, daß das Werkstück zumindest im Bereich der aufzuheizenden Werkstückpartie als hülsenförmige Werkzeugaufnahme zum thermischen Ein- und Ausschrumpfen eines zylindrischen Werkzeugschafts ausgebildet ist.

Um die Luftspaltverluste zu verringern und dadurch die Aufheizzeit zu verkürzen, ist es von Vorteil, wenn das Werkstück zumindest im Bereich der aufzuheizenden Werkstückpartie aus einem elektrisch leitenden und zugleich weichmagnetischen Material, vorzugsweise aus einem Eisenwerkstoff besteht.

Eine weitere Verringerung der Luftspaltverluste läßt sich erreichen, wenn einander polseitig zugewandten Schenkel der Spulenkeme in ihrer Länge und in der Ausrichtung ihrer Polflächen an die Oberflächenkontur der aufzuheizenden Werkstückpartie angepaßt sind. Mit diesen Maßnahmen, bei denen die seitlichen Polschenkel im Bereich der Polflächen einen offenen Winkel miteinander einschließen, ist es auch möglich, ein und dieselbe Spulenanordnung für unterschiedliche Werkstückdurchmesser zu verwenden.

Eine weitere Verbesserung der Luftspaltverluste wird erzielt, wenn die der aufzuheizenden Werkstückpartie zugewandten Polflächen der Spulenkerne zumindest teilweise mit einer Isalolatorschicht überzogen sind. In diesem Fall können die Spulenkerne im Bereich der Isolatorschicht gegen die Oberfläche der aufzuheizenden Werkstückpartie unter Beibehaltung eines kleinen Luftspalts angeschlagen werden.

Um die Positionierung auch kompliziert gestalteter Werkstücke im Bereich zwischen den Spulenkernen zu erleichtern, hat es sich als vorteilhaft erwiesen, wenn die Spulenkerne mit den zugehörigen Spulen quer zu ihrem Luftspalt begrenzt gegeneinander verschiebbar sind. Eine Automatisierung dieses Vorgangs wird ermöglicht, wenn die Spulenkeme motorisch oder entgegen der Kraft einer Feder relativ zueinander verschiebbar sind. Im letzteren Falle kann die Verschiebung auch dadurch automatisiert werden, daß die Spulen auf den Spulenkemen mit einem Gleichstromanteil unter Aufbau einer die Spulenkerne entgegen der Kraft mindestens einer Feder voneinander abstoßenden oder einander anziehenden Kraft beaufschlagbar sind. Im Falle einer abstoßenden Kraft können die Positionierung mit Gleichstrombeaufschlagung und die induktive Aufheizung zeitlich voneinander getrennt werden, während im letzteren Falle bei Erzeugung eines anziehenden Kraft die Positionierung und Aufheizung gleichzeitig mit einem Gleichstrom- und einem Wechselstromanteil erfolgt.

Im folgenden wird die Erfindung anhand der in der Zeichnung in schematischer Weise dargestellten Ausführungsbeispiele näher erläutert. Es zeigen
- Fig. 1: eine schaubildliche Darstellung einer induktiven Schrumpfstation für Werkzeuge mit geteilter Spulenanordnung welche nicht der Erfindung entspricht;
- Fig. 2: eine Draufsicht auf die Spulenanordnung mit E-Kernen der Schrumpfanordnung nach Fig. 1;
- Fig. 3: eine Draufsicht auf eine erfindungsgemäße Spulenanordnung mit U-Kernen und schrägen Polflächen;
- Fig. 4-6: der Magnetfeldverlauf bei nicht der Erfindung entsprechenden entsprechenden Spulenarordnungen, wobei die einzelnen Figuren zeigen;

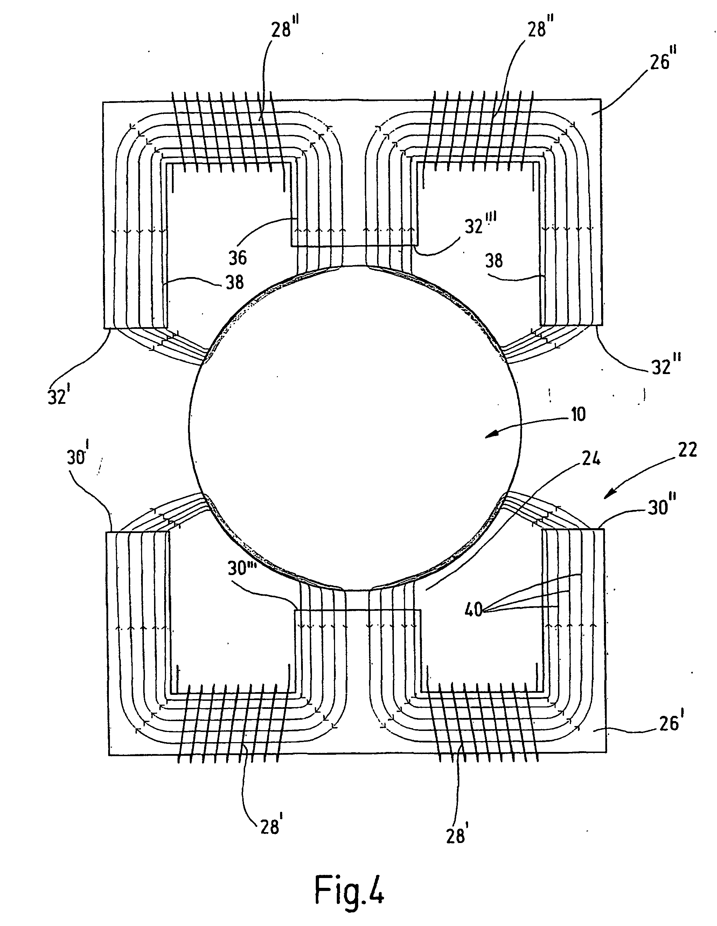

- Fig. 4: ein Schema des Magnetfeldverlaufs in einer Spulenanordnung mit E-Kernen und gleichpoligen Polflächen;

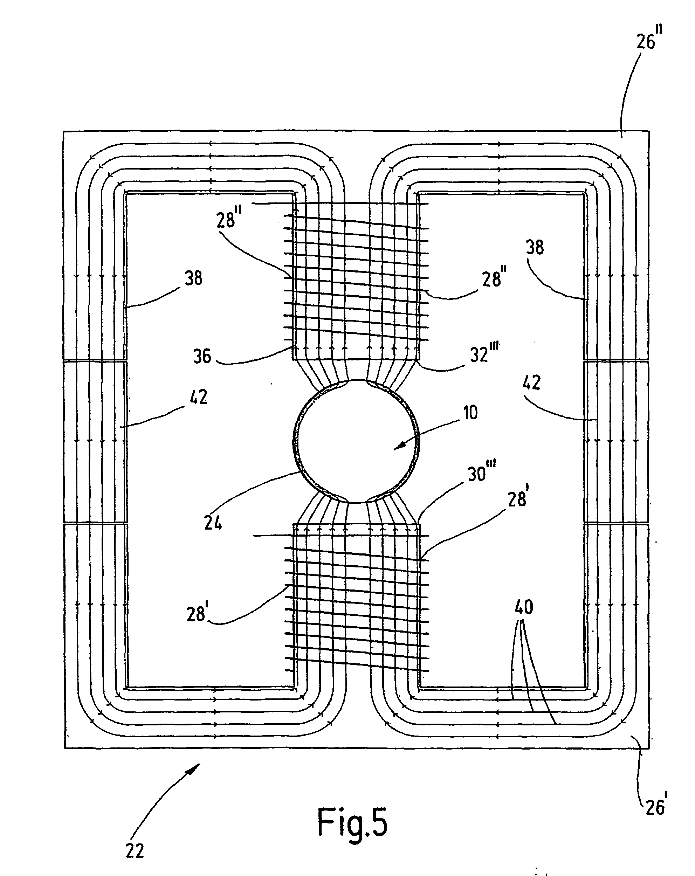

- Fig. 5: ein Schema des Magnetfeldverlaufs in einer Spulenanordnung mit E-Kernen und gegenpoligen Polflächen;

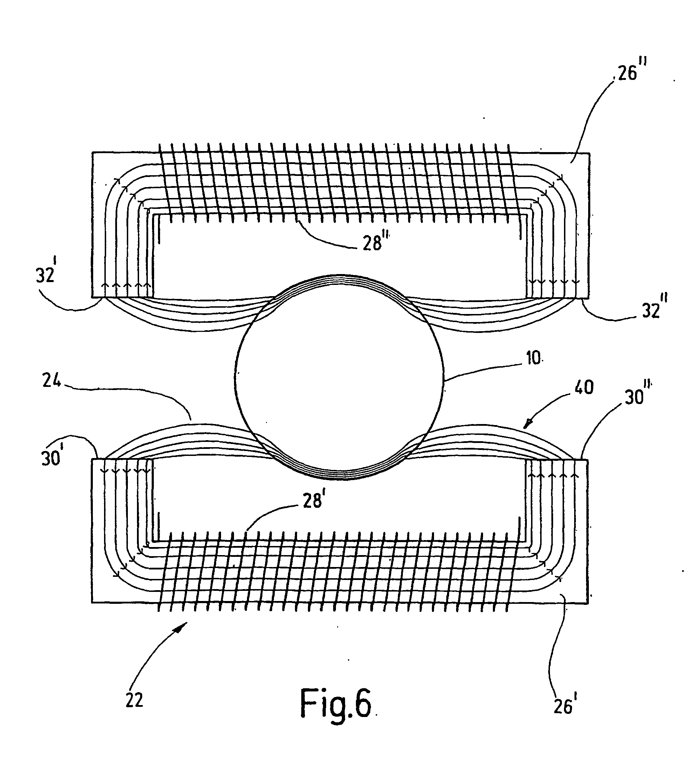

- Fig. 6: ein Schema des Magnetfeldverlaufs in einer Spulenanordnung mit U-Kernen und gleichpoligen Polflächen.

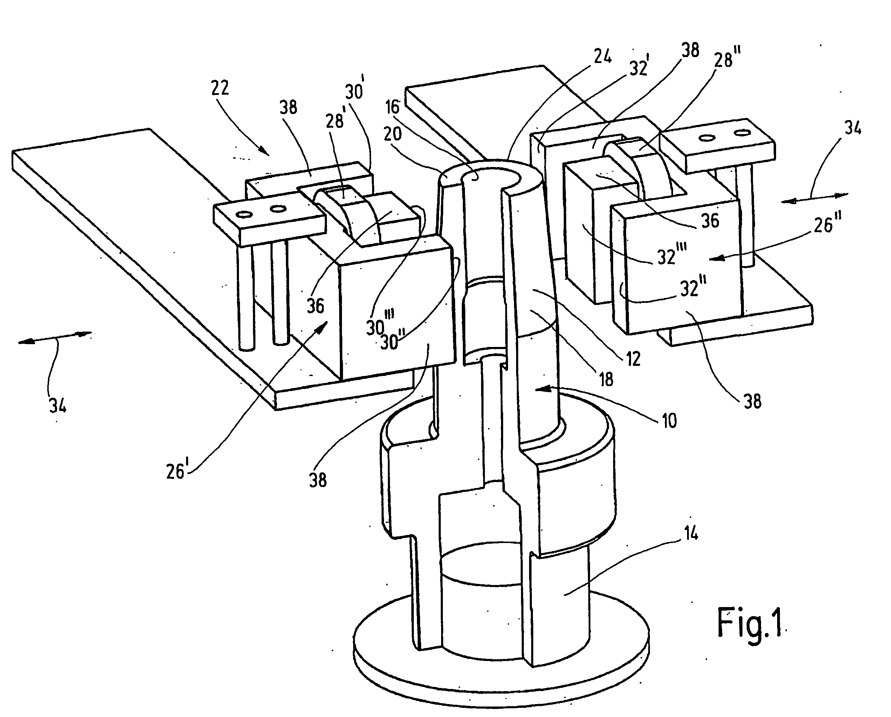

Die in Fig. 1 dargestellte Schrumpfvorrichtung ist zum reversiblen thermischen Spannen zylindrischer Werkzeuge in einem Spannfutter 10 bestimmt. Das Spannfutter 10 weist dazu eine an ihrem einen Ende offene Hülsenpartie 12 zur reibschlüssigen Aufnahme des zylindrischen Schafts eines nicht dargestellten Werkzeugs auf. Das Spannfutter 10 ist bei dem gezeigten Ausführungsbeispiel als Adapter ausgebildet, der an seinem rückwärtige Ende ein als Hohlschaft ausgebildetes Kupplungselement 14 für den Anschluß an eine nicht dargestellte, schnelldrehende Maschinenspindel aufweist. Die Hülsenpartie 12 weist eine Aufnahmebohrung 16 sowie eine kegelstumpfförmige Mantelfläche 18 auf. Stimseitig ist das Spannfutter durch eine umlaufende Ringfläche 20 begrenzt. Der Durchmesser der Aufnahmebohrung 16 weist bei Umgebungstemperatur gegenüber dem einzuspannenden Werkzeugschaft Untermaß auf. Das Ein- und Ausspannen des Werkzeugs ist daher nur bei erhöhter Temperatur der Hülsenpartie 12 bis ca. 450 °C möglich.

Die Erwärmung der Hülsenpartie 12 erfolgt mit Hilfe einer zweigeteilten Spulenanordnung 22, bestehend aus zwei durch einen in seiner Weite verstellbaren Luftspalt 24 getrennten Spulenkemen 26', 26" aus weichmagnetischem Material, die jeweils mindestens eine Induktionsspule 28', 28" tragen und deren Polflächen 30', 30", 30''' bzw. 32', 32", 32''' über den Luftspalt 24 hinweg einander paarweise zugewandt sind. Die Erwärmung der Hülsenpartie 12 erfolgt mit Hilfe der Spulenanordnung 22, wozu die Induktionsspulen 28', 28" mit einem hochfrequentem Wechselstrom beaufschlagbar sind. Die Hülsenpartie 12 besteht zu diesem Zweck aus einem elektrisch leitenden Material, in das die Feldlinien der Spulenanordnung 22 im Mantelbereich eindringen und durch Erzeugung von elektrischen Wirbelströmen zu einer Erwärmung führen. Das Spannfutter 10 wird mit seiner Hülsenpartie 15 in den Luftspalt 24 der Spulenanordnung 22 eingeführt. Um auch Werkzeuge mit einem verdickten Schaft in das Spannfutter 10 einspannen zu können, sind die Spulenkeme 26', 26" mit ihren Induktionsspulen 28', 28" quer zum Luftspalt 24 in Richtung der Doppelpfeile 34 begrenzt gegeneinander verschiebbar. Zur Automatisierung dieses Bewegungsablaufs kann das Verschieben der Spulenkerne entweder motorisch oder unter der Einwirkung einer nicht dargestellten Feder und eines über die Induktionsspulen aufgebauten Gleichmagnetfelds erfolgen.

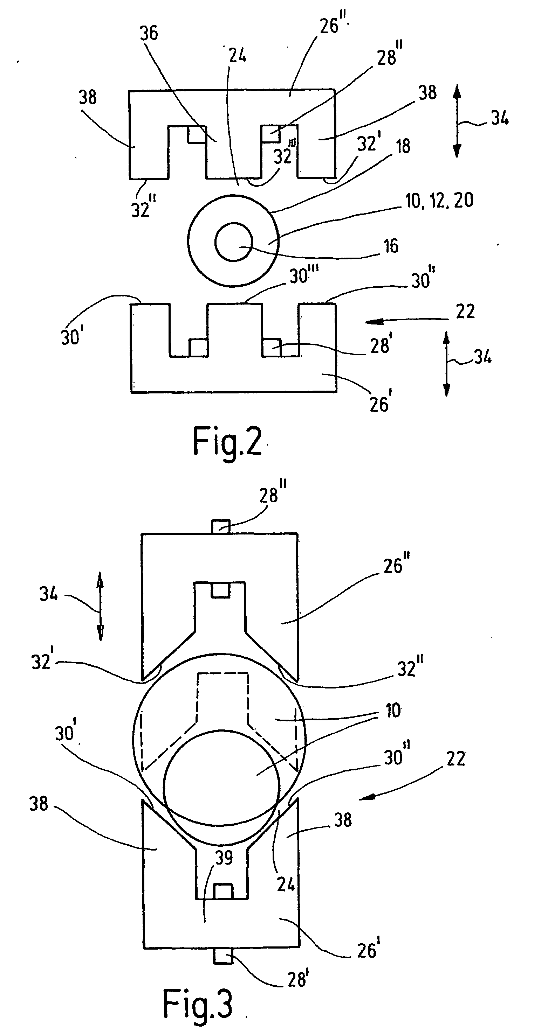

Bei der in Fig. 1 und 2 gezeigten Ausführung weisen die Spulenkerne 26', 26" eine E-förmige Gestalt auf. Die zugehörigen Induktionsspulen 28', 28" sind jeweils auf dem Mittelschenkel 36 des Spulenkems angeordnet, während die beiden Außenschenkel 38 frei sind. Bei einem E-Kern ist es grundsätzlich möglich, die Induktionsspulen 28', 28" auch an anderer Stelle als am Mittelschenkel 36 anzuordnen. So können beispielsweise jeweils zwei gegenpolig geschaltete Induktionsspulen 28', 28 " auf den zwischen den Mittelschenkeln 36 und den Außenschenkeln 38 angeordneten Verbindungsstegen angeordnet werden, wie dies in Fig. 4 gezeigt ist. Zur Verringerung der Luftspaltverluste sind dort zusätzlich die Mittelschenkel 36 und die Außenschenkel 38 unterschiedlich lang ausgebildet. Dadurch werden die Polschenkel unter Verkleinerung der Luftspalte an die Außenkontur der Hülsenpartie 12 des Spannfutters 10 angepaßt.

In Fig. 4 ist der Verlauf der magnetischen Feldlinien bei gleichpoligem Betrieb der einander gegenüberliegenden Magnetpole dargestellt. Die Hülsenpartie 12 des Spannfutters 10 besteht aus einem magnetisch und elektrisch leitfähigen Material, so daß die Feldlinien 40 im Mantelbereich der Hülsenpartie 12 konzentriert werden. Die Richtung des Magnetfeldes ist durch die Pfeile an den Feldlinien angedeutet, wobei sich die Richtung der Polung mit der Frequenz des Wechselstroms, mit dem die Induktionsspulen 28', 28" beaufschlagt werden, umkehrt. Aufgrund des Skin-Effekts entstehen nur im Mantelbereich der Hülsenpartie Wirbelströme, die die Wärmequelle für die Aufheizung der Hülsenpartie 12 bilden. Der Rest wird durch Wärmeleitung von außen nach innen aufgeheizt.

Bei der in Fig. 5 gezeigten Ausführung sind die Induktionsspulen ähnlich wie im Falle der Fig. 1 auf dem Mittelschenkel 36 angeordnet. Zusätzlich sind in diesem Falle im Bereich der Außenschenkel 38 Magnetleitelemente 42 vorgesehen, die den Luftspalt im Bereich der Außenschenkel 38 überbrücken und damit die Induktivität des Gesamtsystems erhöhen. Damit wird die Wärmeeinkopplung im Bereich der Hülsenpartie 12 bei gegebener Wicklungszahl und Stromstärke durch die Induktionsspulen 28', 28" erhöht.

Bei den in Fig. 3 und 6 gezeigten Ausführungen ist jeweils ein U-förmiger Spulenkern 26', 26" vorgesehen. Die Induktionsspulen 28', 28" sind dort jeweils auf dem Verbindungssteg 39 angeordnet. Bei dem Ausführungsbeispiel nach Fig 3 sind die Polflächen 30', 30", 32', 32" in Anpassung an die Kontur der aufzuheizenden Hülsenpartie 12 schräg ausgerichtet. Damit können mit ein und derselben Spulenanordnung 22 unterschiedlich große Werkstücke 10 optimal aufgeheizt werden.

In Fig. 6 ist wiederum der Verlauf der magnetischen Feldlinien 40 im Betriebszustand gezeigt, und zwar für den Fall, daß die einander zugewandten Polflächenpaare 30', 32' bzw. 30", 32" gleichpolig sind. Bei der gleichpoligen Schaltung werden die von den magnetischen und damit auch den elektrischen Feldlinien durchdrungenen Oberflächenbereiche der Hülsenpartie 12 bevorzugt aufgeheizt, so daß sich über den Umfang der Hülsenpartie eine variable Temperaturverteilung einstellt. Dies gilt im übrigen auch für die in den Fig. 4 und 5 gezeigten Ausführungen. Es hat sich jedoch gezeigt, daß trotz dieser räumlichen Termperaturvariation eine weitgehend gleichmäßige Aufweitung der Aufnahmebohrung 16 in allen Richtungen erfolgt.

Grundsätzlich ist es jedoch auch möglich, die Temperaturverteilung über den Umfang der Hülsenpartie 12 dadurch zu verbessern, daß die Spulen 28', 28 " auf den beiden Spulenkemen 26', 26" in vorgegebenen, gegebenenfalls variablen Zeitabständen alternierend mit gleichphasigen und gegenphasigen Wechselströmen beaufschlagt werden. Dies ist allerdings nur bei solchen Ausführungsformen der Spulenkeme 26', 26" möglich, die mindestens zwei Polflächenpaare ausweisen, wie dies bei den Fig. 4 und 6 der Fall ist. Bei dem Ausführungsbeispiel nach Fig. 5 ist aus diesem Grund ein entsprechender Polwechsel nicht möglich.

Zusammenfassend ist folgendes festzustellen: Die Erfindung bezieht sich auf eine Vorrichtung zum induktiven Aufheizen einer vorzugsweisen hülsenförmigen Werkstückpartie 12 eines aus elektrisch leitendem Material bestehenden Werkstücks 10 mit einer die Werkstückpartie an ihrem Umfang zumindest teilweise umfassenden, mit einem hochfrequentem Wechselstrom beaufschlagbaren Spulenanordnung 22. Um auch kompliziert gestaltete, mit Verdickungen versehene Werkstücke aufheizen zu können, wird gemäß der Erfindung eine teilbare Spulenanordnung vorgeschlagen, die mindestens zwei je eine Spule 28', 28" tragende Spulenkeme 26', 26" aufweist, deren Polflächen einander über einen Luftspalt hinweg zugewandt sind, wobei die aufzuheizende Werkstückpartie 12 in den Luftspalt 24 zwischen den Polflächen der Spulenkerne einführbar ist.

## Patentansprüche

1. Vorrichtung zum induktiven Aufheizen einer rotationssymmetrischen hülsenförmigen Werkstückpartie (12) eines aus elektrisch leitendem Material bestehenden Werkstücks (Spannfutter 10) mit einer die Werkstückpartie (12) an ihrem Umfang zumindest teilweise umfassenden mit einem hochfrequentem Wechselstrom beaufschlagbaren Spulenanordnung (22), wobei die Spulenanordnung (22) mindestens zwei durch einen in seiner Weite verstellbaren Luftspalt (24) getrennte, mindestens je eine Spule (28', 28") tragende Spulenkerne (26', 26") aus magnetisierbarem Material aufweist, deren Polflächen (30', 30 ", 30'''; 32', 32"; 32''') einander über den Luftspalt (24) hinweg zugewandt sind und deren Spulen (28', 28") unter Erzeugung eines an den einander jeweils zugewandten Polflächen gleichpoligen oder gegenpoligen Wechselmagnetfelds mit hochfrequentem Wechselstrom beaufschlagbar sind und wobei die aufzuheizende Werkstückpartie (12) in den Luftspalt (24) zwischen den Polflächen der Spulenkeme (26', 26") einführbar ist und die einander zugewandten Spulenkerne (26', 26") eine U-förmige Gestalt aufweisen, wobei die freien Polflächen (30', 30"; 32', 32") der U-Schenkel (38) der Spulenkerne (26', 26") unter Bildung des Luftspalts (24) einander zugewandt sind, **dadurch gekennzeichnet, daß** die freien Polflächen (30', 30"; 32', 32") und in Anpassung an die Außenkontur der aufzuheizenden Werkstückpartie (12) schräg ausgerichtet sind und dabei paarweise einen in Richtung Luftspalt (24) offenen Winkel miteinander einschließen.

2. Vorrichtung nach Anspruch 1, **dadurch gekennzeichnet, dass** die auf den Spulenkernen (26', 26") angeordneten Spulen (28', 28") so mit Wechselstrom gleicher Frequenz und gleicher oder ungleicher Phase beaufschlagbar sind, dass die einander zugewandten Polflächen der Spulenkerne (26', 26") gleichpolig oder gegenpolig gepolt sind.

3. Vorrichtung nach Anspruch 2, **dadurch gekennzeichnet, dass** die Spulen (28', 28") auf den beiden Spulenkernen (26', 26") in vorgegebenen Zeitabständen alternierend mit gleichphasigen und gegenphasigen Wechselströmen beaufschlagbar sind.

4. Vorrichtung nach einem der Ansprüche 1 bis 3, **dadurch gekennzeichnet, dass** das Werkstück (10) zumindest im Bereich der aufzuheizenden Werkstückpartie (12) als hülsenförmige Werkzeugaufnahme ausgebildet ist.

5. Vorrichtung nach einem der Ansprüche 1 bis 4, **dadurch gekennzeichnet, dass** das Werkstück (10) zumindest im Bereich der aufzuheizenden Werkstückpartie (12) aus einem weichmagnetischen Material, vorzugsweise aus einem Eisenwerkstoff besteht.

6. Vorrichtung nach einem der Ansprüche 1 bis 5, **dadurch gekennzeichnet, dass** die einander zugewandten Schenkel (38) der Spulenkeme (26', 26") in ihrer Länge und in der Ausrichtung ihrer Polflächen an die Oberflächenkontur der aufzuheizenden Werkstückpartie (12) angepasst sind.

7. Vorrichtung nach einem der Ansprüche 1 bis 6, **dadurch gekennzeichnet, dass** die Polflächen (30', 30"; 32', 32") der Spulenkerne (26', 26") zumindest teilweise mit einer Isolatorschicht überzogen sind.

8. Vorrichtung nach Anspruch 7, **dadurch gekennzeichnet, dass** die Spulenkerne (26, 26') mit ihren Schenkeln (38) im Bereich der Isolatorschicht gegen die Oberfläche der aufzuheizenden Werkstückpartie (12) anschlagbar sind.

9. Vorrichtung nach einem der Ansprüche 1 bis 8, **dadurch gekennzeichnet, dass** die Spulenkeme (26', 26") mit den zugehörigen Spulen (28', 28") unter Verkleinerung oder Vergrößerung des Luftspalts (24) begrenzt gegeneinander verschiebbar sind.

10. Vorrichtung nach Anspruch 9, **dadurch gekennzeichnet, dass** die Spulenkerne (26', 26") entgegen der Kraft mindestens einer Feder relativ zueinander verschiebbar sind.

11. Vorrichtung nach Anspruch 9 oder 10, **dadurch gekennzeichnet, dass** die Spulen (28, 28') auf den Spulenkernen (26', 26") mit einem Gleichstromanteil unter Aufbau eines die Spulenkerne (26', 26") entgegen der Kraft mindestens einer Feder voneinander abstoßenden oder einander anziehenden Kraft beaufschlagbar sind.

12. Vorrichtung nach Anspruch 9, **dadurch gekennzeichnet, dass** die Spulenkerne (26', 26") motorisch gegeneinander verschiebbar sind.

## Claims

1. Device for inductively heating a rotationally symmetrical sleeve-shaped workpiece part (12) of a workpiece (chuck 10) consisting of electrically conductive material with a coil arrangement (22) which encompasses the workpiece part (12) at least partially at its circumference and to which a high-frequency alternating current can be applied, wherein the coil arrangement (22) comprises at least two coil cores (26', 26") of magnetizable material which are separated by an air gap (24) of an adjustable width, which each bear at least one coil (28', 28") and the pole faces (30', 30", 30'"; 32', 32"; 32'") of which face one another over the air gap (24), and high-frequency alternating current can be applied to the coils (28', 28") of the coil cores, thereby generating an alternating magnetic field which is homopolar or antipolar at the respective facing pole faces, and wherein the workpiece part (12) which is to be heated can be introduced into the air gap (24) between the pole faces of the coil cores (26', 26"), and the facing coil cores (26', 26") have a U-shaped form, wherein the free pole faces (30', 30"; 32', 32") of the U-limbs (38) of the coil cores (26', 26") face one another, thereby forming the air gap (24), **characterised in that** the free pole faces (30', 30" 32', 32") are oriented obliquely so as to adapt to the outer contour of the workpiece part (12) which is to be heated and form in pairs with one another an angle which is open in the direction of the air gap (24).

2. Device according to Claim 1, **characterised in that** alternating current of the same frequency and of the same or unlike phase can be applied to the coils (28', 28") disposed on the coil cores (26', 26") such that the facing pole faces of the coil cores (26', 26") are poled in homopolar or antipolar fashion.

3. Device according to Claim 2, **characterised in that** in-phase and antiphase alternating currents can alternately be applied to the coils (28', 28") on the two coil cores (26', 26") at predetermined time intervals.

4. Device according to any one of Claims 1 to 3, **characterised in that** the workpiece (10) is formed as a sleeve-shaped tool holder, at least in the area of the workpiece part (12) which is to be heated.

5. Device according to any one of Claims 1 to 4, **characterised in that** the workpiece (10) consists of a soft magnetic material, preferably of a ferrous material, at least in the area of the workpiece part (12) which is to be heated.

6. Device according to any one of Claims 1 to 5, **characterised in that** the limbs (38) of the coil cores (26', 26") which face one another are adapted to the surface contour of the workpiece part (12) which is to be heated in terms of their length and the orientation of their pole faces.

7. Device according to any one of Claims 1 to 6, **characterised in that** the pole faces (30', 30"; 32', 32") of the coil cores (26', 26") are at least partially covered with an insulating layer.

8. Device according to Claim 7, **characterised in that** the coil cores (26, 26') can be applied with their limbs (38) in the area of the insulating layer to the surface of the workpiece part (12) which is to be heated.

9. Device according to any one of Claims 1 to 8, **characterised in that** the coil cores (26', 26") with the associated coils (28', 28") can be displaced relative to one another within limits, thereby reducing or enlarging the air gap (24).

10. Device according to Claim 9, **characterised in that** the coil cores (26', 26") can be displaced relative to one another against the force of at least one spring.

11. Device according to Claim 9 or 10, **characterised in that** a d.c. component can be applied to the coils (28, 28') on the coil cores (26', 26"), thereby building up a force which pushes the coil cores (26', 26") apart or draws them together against the force of at least one spring.

12. Device according to Claim 9, **characterised in that** the coil cores (26', 26") can be displaced relative to one another by means of a motor.

## Revendications

1. Dispositif de chauffage par induction d'une partie de pièce usinée (12) en forme de douille à symétrie de révolution d'une pièce usinée (mandrin de serrage 10) en matériau électroconducteur, avec un arrangement de bobines (22) entourant au moins partiellement la partie de pièce usinée (12) sur sa circonférence, pouvant être alimenté en courant alternatif à haute fréquence, l'arrangement de bobines (22) présentant au moins deux noyaux de bobine (26', 26") en matériau magnétisable séparés par un entrefer (24) réglable dans sa largeur, portant chacun au moins une bobine (28', 28"), dont les surfaces polaires (30', 30", 30''' ; 32', 32", 32"') se font face par-delà l'entrefer (24) et dont les bobines (28', 28") peuvent être alimentées en courant alternatif à haute fréquence en générant un champ magnétique alternatif de même polarité ou de polarité opposée sur les surfaces polaires se faisant face, et la partie de pièce usinée (12) à chauffer pouvant être introduite dans l'entrefer (24) entre les surfaces polaires des noyaux de bobine (26', 26"), et les noyaux de bobine (26', 26") se faisant face présentant une forme en U, les surfaces polaires libres (30', 30" ; 32', 32") des branches du U (38) des noyaux de bobine (26', 26") se faisant face en formant l'entrefer, **caractérisé par le fait que** les surfaces polaires libres (30', 30" ; 32', 32") sont orientées obliquement pour s'adapter au contour extérieur de la partie de pièce usinée (12) à chauffer et incluent l'une avec l'autre par paires un angle ouvert en direction de l'entrefer (24).

2. Dispositif selon la revendication 1, **caractérisé par le fait que** les bobines (28', 28") disposées sur les noyaux de bobine (26', 26") peuvent être alimentées en courant alternatif de même fréquence et de phase égale ou différente, de telle façon que les surfaces polaires se faisant face des noyaux de bobine (26', 26") soient polarisées de la même manière ou de manière opposée.

3. Dispositif selon la revendication 2, **caractérisé par le fait que** les bobines (28', 28") disposées sur les deux noyaux de bobine (26', 26") peuvent être alimentées alternativement, à intervalles de temps donnés, en courants alternatifs de même phase et de phase opposée.

4. Dispositif selon l'une des revendications 1 à 3, **caractérisé par le fait que** la pièce usinée (10) est, au moins dans la zone de la partie de pièce usinée (12) à chauffer, réalisée sous la forme d'un logement d'outil en forme de manchon.

5. Dispositif selon l'une des revendications 1 à 4, **caractérisé par le fait que** la pièce usinée (10) est, au moins dans la zone de la partie de pièce usinée (12) à chauffer, réalisée dans un matériau magnétique doux, de préférence dans un matériau ferreux.

6. Dispositif selon l'une des revendications 1 à 5, **caractérisé par le fait que** les branches (38) des noyaux de bobines (26', 26") se faisant face sont adaptées dans leur longueur et dans l'orientation de leurs surfaces polaires au contour superficiel de la partie de pièce usinée (12) à chauffer.

7. Dispositif selon l'une des revendications 1 à 6, **caractérisé par le fait que** les surfaces polaires (30', 30" ; 32', 32") des noyaux de bobine (26', 26") sont au moins partiellement revêtues d'une couche isolante.

8. Dispositif selon l'une des revendications 1 à 7, **caractérisé par le fait que** les noyaux de bobine (26', 26") peuvent, par leur branches (38), dans la zone de la couche isolante, être appuyés contre la surface de la partie de pièce usinée (12) à chauffer.

9. Dispositif selon l'une des revendications 1 à 8, **caractérisé par le fait que** les noyaux de bobine (26', 26") avec leurs bobines (28', 28") associées sont déplaçables l'un par rapport à l'autre de manière limitée en rétrécissant ou agrandissant l'entrefer (24).

10. Dispositif selon la revendication 9, **caractérisé par le fait que** les noyaux de bobine (26', 26") sont déplaçables l'un par rapport à l'autre contre la force d'au moins un ressort.

11. Dispositif selon la revendication 9 ou 10, **caractérisé par le fait que** les bobines (28', 28") sur les noyaux de bobine (26', 26") peuvent être soumises à une composante de courant continu en créant une force repoussant l'un de l'autre ou attirant l'un vers l'autre les noyaux de bobine (26', 26") contre la force d'au moins un ressort.

12. Dispositif selon la revendication 9, **caractérisé par le fait que** les noyaux de bobine (26', 26") sont déplaçables l'un par rapport à l'autre au moyen d'un moteur.
